(19) Europäisches Patentamt
European Patent Office
Office européen des brevets

(11) **EP 3 599 064 A2**

(12) **EUROPEAN PATENT APPLICATION**

(43) Date of publication:
**29.01.2020 Bulletin 2020/05**

(51) Int Cl.:
**B25J 9/16** *(2006.01)*

(21) Application number: **19187566.5**

(22) Date of filing: **22.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.07.2018 JP 2018138212**

(71) Applicant: **Seiko Epson Corporation
Tokyo 160-8801 (JP)**

(72) Inventors:
• **Motoyoshi, Masaki
Nagano, 392-8502 (JP)**
• **Unno, Yukihiro
Nagano, 392-8502 (JP)**

(74) Representative: **Hoffmann Eitle
Patent- und Rechtsanwälte PartmbB
Arabellastraße 30
81925 München (DE)**

(54) **ROBOT SYSTEM**

(57)    A robot system includes a robot having a base, an arm supported by the base, and a force detection unit provided in the base and detecting a first force applied to the arm, and a control unit that controls motion of the robot. The control unit performs force control of the arm and deceleration of the arm according to contact between the robot and an object based on output of the force detection unit.

*FIG. 2*

**Description**

The present application is based on, and claims priority from JP Application Serial Number 2018-138212, filed July 24, 2018, the disclosure of which is hereby incorporated by reference herein in its entirety.

BACKGROUND

1. Technical Field

The present disclosure relates to a robot that performs force control.

2. Related Art

In related art, there is a robot that performs force control of controlling a force applied to an object. In a technique of JP-A-2017-177293, a robot system includes a first force sensor and a second force sensor. The first force sensor is inserted between a fixing plate and a robot base. The second force sensor is inserted between an operation unit and an adaptor.

In the technique of JP-A-2017-177293, an acting force applied to an arbitrary part of a robot is detected by the first force sensor. An operation force applied to the operation unit gripped by a worker is detected by the second force sensor. A component of the operation force is removed from the acting force detected by the first force sensor, and thereby, when the arbitrary part of the robot contacts an external object, a contact force applied to the robot from the object is calculated.

When magnitude of the operation force is equal to or larger than a threshold value, hand-guided motion is executed. Specifically, a velocity command for moving the robot according to the operation force is generated. When the contact force is equal to or larger than a threshold value, an emergency stop scheme is executed.

However, in the above described technique of JP-A-2017-177293, in order to realize force control, it is necessary to prepare a secondary force sensor on the finger tip of the robot in addition to the force sensors for contact detection. As a result, compared to a configuration without a force sensor provided on the finger tip of the robot, the mass of the finger tip of the robot is larger, and the movement velocity of the finger tip of the robot that may be realized by nearly equal motor output is lower.

SUMMARY

According to an aspect of the present disclosure, a robot system is provided. The robot system includes a robot having a base, an arm supported by the base, and a force detection unit provided in the base and detecting a force applied to the arm, and a control unit that controls motion of the robot. The control unit performs force control of the arm and deceleration of the arm according to contact between the robot and an object based on output of the force detection unit.

BRIEF DESCRIPTION OF THE DRAWINGS

FIG. 1 is an explanatory diagram schematically showing a robot system of a first embodiment.
FIG. 2 shows functions of a robot, a motion control apparatus, and a teaching apparatus when force control is executed.
FIG. 3 is a block diagram showing processing of compensation of a gravity force and compensation of an inertial force in the motion control apparatus.
FIG. 4 shows a user interface displayed on an output device of the teaching apparatus.
FIG. 5 is a flowchart showing processing of realizing contact detection and force control in the motion control apparatus when the robot is being moved.
FIG. 6 shows a region in which no contact is estimated in a virtual space defined by a force component in an X-axis direction, a force component in a Y-axis direction, and a force component in a Z-axis direction of an acting force.
FIG. 7 shows a region in which no contact is estimated in a virtual space defined by a torque component in a U-axis direction, a torque component in a V-axis direction, and a torque component in a W-axis direction of the acting force.
FIG. 8 is a conceptual diagram showing an example of a configuration of the control apparatus of the robot including a plurality of processors.
FIG. 9 is a conceptual diagram showing another example of the configuration of the control apparatus of the robot including a plurality of processors.

## DESCRIPTION OF EXEMPLARY EMBODIMENTS

A. First Embodiment

A1. Configuration of Robot System:

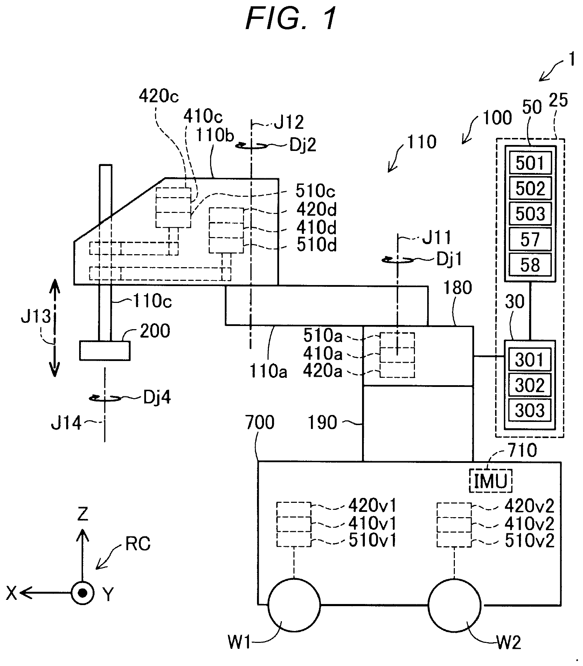

FIG. 1 is the explanatory diagram schematically showing the robot system 1 of the first embodiment. In FIG. 1, to facilitate understanding of the technique, a robot coordinate system RC is shown. The robot coordinate system RC is a three-dimensional orthogonal coordinate system defined by an X-axis and a Y-axis orthogonal to each other on the horizontal plane and a Z-axis in an upward vertical direction as a positive direction. The robot system 1 of the embodiment includes the robot 100, an end effector 200, a vehicle 700, and a robot control apparatus 25.

The robot 100 is a scalar robot. In this specification, "scalar robot" refers to the so-called horizontal articulated robot including a plurality of arm elements configuring an arm and rotating around rotation axes along directions parallel to one another, but no arm element rotating around a rotation axis along a direction perpendicular to the rotation axes of those plurality of arm elements.

The robot 100 is a four-axis robot having an arm 110 including four joints J11 to J14. The arm 110 is supported by a base 180 via the joint J11. The robot 100 respectively rotates or linearly moves the four joints J11 to J14 using servo motors, and thereby, may place the end effector 200 attached to a distal end portion of the arm 110 to a designated position in a designated posture in a three-dimensional space. Note that a point representing the position of the end effector 200 in the three-dimensional space is also referred to as "TCP (Tool Center Point).

In the arm 110, the joints J11, J12, J14 are rotation joints around rotation axes along a direction parallel to the Z-axis direction of the robot coordinate system RC. In FIG. 1, the rotation directions in the joints J11, J12, J14 are shown by Dj1, Dj2, Dj3, respectively. The joint J13 is a linear motion joint moving in directions parallel to the Z-axis direction. Of the plurality of joints forming the arm 110, component elements between the joints adjacent to each other are referred to as "arm elements" in this specification. In FIG. 1, an arm element 110a between the joint J11 and the joint J12, an arm element 110b between the joint J12 and the joint J13, and an arm element 110c forming the distal end of the arm 110 and moved by the joints J13, J14 are shown with signs. The arm element 110a is coupled to the base 180 via the joint J11.

The robot 100 includes a servo motor 410, an encoder 420, and a reducer 510 in each of the joints J11 to J14. The servo motor 410 is controlled by the motion control apparatus 30 and rotates an output shaft thereof. The reducer 510 decelerates and transmits the rotation of the output shaft of the servo motor 410 to the arm element. The encoder 420 detects a rotation angle of the output shaft of the servo motor 410.

In FIG. 1, a servo motor 410a, an encoder 420a, and a reducer 510a for driving the joint J11, a servomotor 410c, an encoder 420c, and a reducer 510c for driving the joint J13, a servomotor 410d, an encoder 420d, and a reducer 510d for driving the joint J14 are shown with signs. In this specification, when mentioned without distinction from one another, the servo motors 410a to 410d are referred to as "servo motor 410". When mentioned without distinction from one another, the encoders 420a to 420d are referred to as "encoder 420". When mentioned without distinction from one another, the reducers 510a to 510d are referred to as "reducer 510".

The arm element 110a rotated via the joint J11, the arm element 110b rotated via the joint J12, and the arm element 110c rotated via the joint J14 are respectively rotated in horizontal directions.

A male screw is formed in an outer surface of a part of the arm element 110c. The part of the arm element 110c functions as a ball screw. By the servo motor 410d, the arm element 110c as the ball screw is moved along directions shown by an arrow J13 relative to the arm element 110b.

The base 180 supports the arm 110. A force detection unit 190 is provided in the lower part of the base 180. The force detection unit 190 may detect a force applied to the arm 110. More specifically, the force detection unit 190 may detect forces in directions along three axes of the X-axis, Y-axis, and Z-axis and torque about the U-axis, V-axis, W-axis as rotation axes applied externally, i.e., from another configuration than the force detection unit 190. As a result, the force detection unit 190 may measure the forces in the directions along the three axes of the X-axis, Y-axis, and Z-axis and torque about the U-axis, V-axis, W-axis acting on the arm 110 as another configuration than the force detection unit 190. The output of the force detection unit 190 is transmitted to the motion control apparatus 30 and used for control of the robot 100.

The vehicle 700 supports the base 180 via the force detection unit 190. The vehicle 700 may move the robot 100 to an arbitrary position on a floor surface. The vehicle 700 includes two pairs of wheels W1, W2, servo motors 410v1, 410v2, encoders 420v1, 420v2, and reducers 510v1, 510v2. Note that, in this specification, when mentioned without distinction from one another, the servo motors 410v1, 410v2 are referred to as "servo motor 410v". When mentioned without distinction from one another, the encoders 420v1, 420v2 are referred to as "encoder 420v". When mentioned without distinction from one another, the reducers 510v1, 510v2 are referred to as "reducer 510v".

The servo motors 410v1, 410v2 are controlled by the motion control apparatus 30 and rotate output shafts thereof. The reducers 510v1, 510v2 decelerate and transmit the rotation of the respective output shafts of the servo motors 410v1, 410v2 to the wheels W1, W2, respectively. The encoders 420v1, 420v2 detect rotation angles of the output shafts of the servo motors 410v1, 410v2, respectively.

The end effector 200 is attached to the distal end of the arm 110. The end effector 200 may grip a work piece as an object of work and release the gripped work piece under control of the motion control apparatus 30. As a result, for example, the end effector 200, the robot 100, and the vehicle 700 may grip and move the work piece under control of the motion control apparatus 30. Note that, in FIG. 1, to facilitate understanding of the technique, the end effector 200 is shown by a simple rectangle.

The robot control apparatus 25 controls the robot 100. The robot control apparatus 25 includes the motion control apparatus 30 and the teaching apparatus 50.

The motion control apparatus 30 is a control apparatus that controls the operation of the robot 100. The motion control apparatus 30 is coupled to the robot 100. The motion control apparatus 30 includes a CPU (Central Processing Unit) 301 as a processor, a RAM (Random Access Memory) 302, and a ROM (Read-Only Memory) 303. In the motion control apparatus 30, control programs for controlling the robot 100 are installed. In the motion control apparatus 30, the CPU 301, the RAM 302, the ROM 303 as hardware resources and the control programs cooperatively operate. Specifically, the CPU 301 loads and executes computer programs stored in the ROM 303 in the RAM 302, and thereby, realizes various functions.

The teaching apparatus 50 is an apparatus for teaching a target position St and a target force fSt to the motion control apparatus 30. Note that the target force fSt may include a linearly acting force and torque as components. The teaching apparatus 50 includes a CPU 501 as a processor, a RAM 502, and a ROM 503. In the teaching apparatus 50, control programs for teaching the target position St and the target force fSt to the motion control apparatus 30 are installed. In the teaching apparatus 50, the CPU 501, the RAM 502, and the ROM 503 as hardware resources and the control programs cooperatively operate. Specifically, the CPU 501 loads and executes computer programs stored in the ROM 503 in the RAM 502, and thereby, realizes various functions.

The teaching apparatus 50 further includes an input device 57 and an output device 58. The input device 57 receives instructions from a user. The input device 57 includes e.g. a mouse, keyboard, touch panel, etc. The output device 58 outputs various kinds of information to the user. The output device 58 includes e.g. a display, speaker, etc.

A2. Processing of Force Control by Motion control Apparatus 30 :

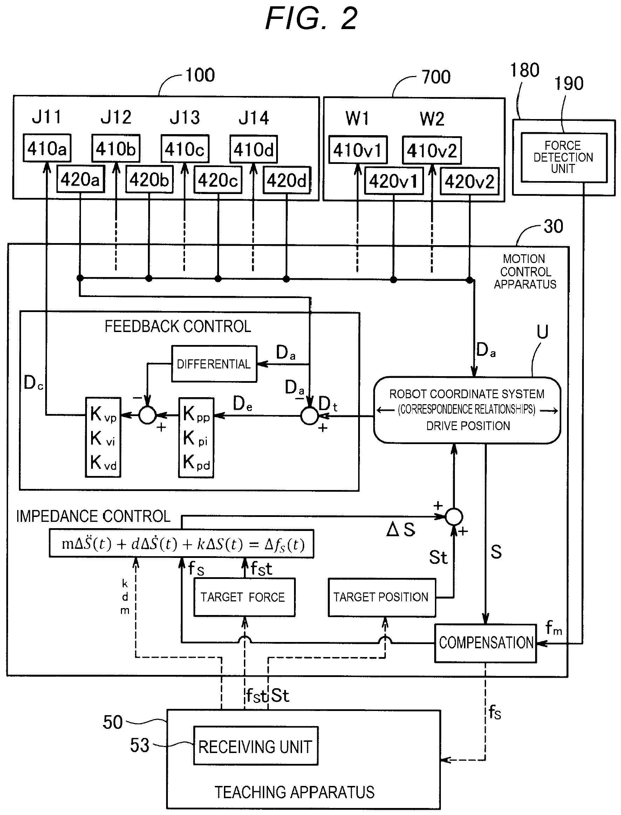

FIG. 2 shows the functions of the robot 100, the motion control apparatus 30, and the teaching apparatus 50 when force control is executed. "S" shown in FIG. 2 indicates one direction of the directions of the axes defining the robot coordinate system RC, i.e., the X-axis direction, the Y-axis direction, and the Z-axis direction, and the U-axis direction, the V-axis direction, and the W-axis direction as the rotation axis directions. Note that the U-axis direction is the rotation direction around the rotation axis along the X-axis direction. The V-axis direction is the rotation direction around the rotation axis along the Y-axis direction. The W-axis direction is the rotation direction around the rotation axis along the Z-axis direction. For example, when the direction indicated by S is the X-axis direction, an X-axis direction component of the target position set in the robot coordinate system RC is referred to as St = Xt, and an X-axis direction component of the target force is referred to as fSt = fXt. Further, S also indicates a position along the axis along the direction indicated by S.

The motion control apparatus 30 stores correspondence relationships U between combinations of the rotation angles of the servo motors 410a to 410d of the robot 100 and the positions of TCP in the robot coordinate system RC within the RAM (see the middle right part of FIG. 2). The motion control apparatus 30 associates and stores the target position St with the target force fSt with respect to each step of the work performed by the robot 100 within the RAM. The target position St and the target force fSt are set by teaching work using the teaching apparatus 50.

The motion control apparatus 30 acquires rotation angles Da of the servo motors 410a to 410d from the encoders 420a to 420d, and then, converts the rotation angles Da into the position S of TCP in the robot coordinate system RC based on the correspondence relationship U (see the middle right part of FIG. 2). More specifically, the rotation angles Da are converted into a combination of a position DX, a position DY, a position DZ, a rotation angle RX, a rotation angle RY, and a rotation angle RZ representing the position of TCP.

The force detection unit 190 detects a force fm applied to the arm 110 in a unique coordinate system (see the right upper part of FIG. 2). The force fm applied to the arm 110 may include a linearly acting force and torque as components. A relationship between the coordinate system of the force detection unit 190 and the robot coordinate system RC is stored as known data in the RAM 302 of the motion control apparatus 30 in advance. Accordingly, the motion control apparatus 30 may specify the force fm in the robot coordinate system RC based on the output of the force detection unit 190. Note that, to facilitate understanding of the technique, the relationship between the coordinate system of the force detection unit 190 and the robot coordinate system RC is omitted in FIG. 2.

The motion control apparatus 30 performs compensation of a gravity force and an inertial force for the force fm after conversion into the robot coordinate system RC (see the right lower part of FIG. 2) . "Compensation of gravity force" refers to processing of removing a component induced by the gravity force from the force fm detected by the force detection unit 190. "Compensation of inertial force" refers to processing of removing a component of the inertial force from the force fm detected by the force detection unit 190. Hereinafter, another force than the force induced by the gravity force or the inertial force of the forces detected by the force detection unit 190 is also referred to as "acting force fS". In this specification, the acting force may include a linearly acting force and torque as components.

The acting force fS may include (i) a force applied to the end effector 200 from an assumed work object in force control and (ii) as a result of contact of the end effector 200 or the robot 100 with another configuration than the assumed work object in work, a force applied from the configuration. Usually, the acting force fS is (i) the force applied to the end effector 200 from the assumed work object in the force control.

The motion control apparatus 30 substitutes the target force fSt and the acting force fS into an equation of motion of compliant motion control, and thereby, specifies a force-derived correction amount ΔS (see the middle left part of FIG. 2). In the embodiment, impedance control is employed as the compliant motion control. "Impedance control" refers to control to realize virtual mechanical impedance using the servo motors 410a to 410d. The following equation (1) is an equation of motion of impedance control.

[Math. 1]

$$m\Delta\ddot{S}(t) + d\Delta\dot{S}(t) + k\Delta S(t) = \Delta f_S(t)$$

In the equation (1), m is a mass parameter. The mass parameter is also referred to as "inertial parameter". d is a viscosity parameter. k is an elasticity parameter. The respective parameters m, d, k are acquired from the teaching apparatus 50. The respective parameters m, d, k may be set to different values with respect to each direction or set to common values independent of the directions.

In the equation (1), ΔfS(t) is a deviation of the acting force fS relative to the target force fSt. t in ΔfS(t) indicates time. The target force fSt may be set as a fixed value or set according to a function depending on time in the process performed by the robot 100. The differential in the equation (1) refers to a differential by time.

The force-derived correction amount ΔS obtained from the equation (1) refers to displacement that should be made by TCP when TCP is subjected to the acting force fS by the mechanical impedance, in order to eliminate the force deviation ΔfS(t) of the acting force fS from the target force fSt and achieve the target force fSt. Here, "displacement" is expressed by straight traveling distance and/or rotation angle.

The motion control apparatus 30 adds the force-derived correction amount ΔS to the target position St, and thereby, specifies a corrected target position (St + ΔS) in consideration of the impedance control (see the middle right part of FIG. 2).

The motion control apparatus 30 converts the corrected target position (St + ΔS) with respect to the respective six directions, i.e., the X-axis direction, the Y-axis direction, the Z-axis direction, the U-axis direction, the V-axis direction, and the W-axis direction in the robot coordinate system RC into target angles Dt as respective target drive positions of the servo motors 410a to 410d (see the middle right part of FIG. 2) based on the correspondence relationship U.

The motion control apparatus 30 executes feedback control to make the rotation angles Da of the servo motors 410a to 410d shown by the output of the encoders 420a to 420d coincide with the target angles Dt as control targets. More specifically, the motion control apparatus 30 executes PID control with respect to the position using deviations De of the rotation angles Da from the target angles Dt, integrals of the deviations De, differentials of the deviations De. In FIG. 2, proportional gain Kpp, integral gain Kpi, differential gain Kpd are shown (see the center part of FIG. 2).

The motion control apparatus 30 executes PID control with respect to the velocity using output of the PID control with respect to the position using Kpp, Kpi, Kpd, deviations from the differentials of the rotation angles Da, integrals of the deviations, and differentials of the deviations. In FIG. 2, proportional gain Kvp, integral gain Kvi, differential gain Kvd are shown (see the middle left part of FIG. 2).

As a result of the above described processing, amounts of control Dc for the servo motors 410a to 410d are determined. The motion control apparatus 30 controls the respective servo motors 410a to 410d using the amounts of control Dc for the respective servo motors 410a to 410d.

According to the above described processing, the motion control apparatus 30 may control the arm 110 based on the target position St and the target force fSt set by the teaching apparatus 50 (see the lower part in FIG. 2).

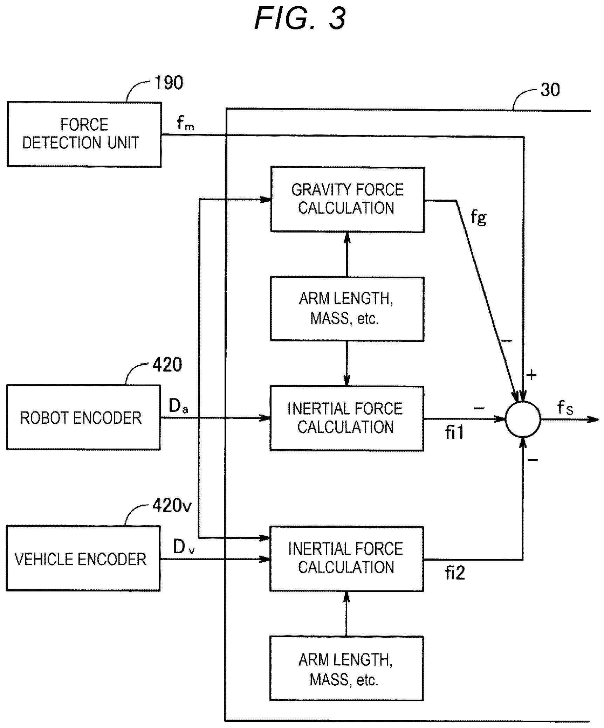

FIG. 3 is the block diagram showing processing of compensation of the gravity force and compensation of the inertial force in the motion control apparatus 30. As described above, the motion control apparatus 30 makes compensation based on the force fm detected by the force detection unit 190, the gravity force acting on the arm 110, and the inertial force induced by the motion of the arm 110 and determines the acting force fS (see the right lower part of FIG. 2).

The motion control apparatus 30 receives information of the force fm from the force detection unit 190. The motion control apparatus 30 receives information of a rotation angle Da of the servo motor 410 of the robot 100 from the encoder 420 of the robot 100. The motion control apparatus 30 receives information of a rotation angle Dv of the servo motor 410v of the vehicle 700 from the encoder 420v of the vehicle 700.

The motion control apparatus 30 calculates forces and torque induced by the gravity force applied to the arm 110 etc. of the forces and torque measured by the force detection unit 190 in the following manner. Note that, in FIG. 3, linear forces and torque induced by the gravity force applied to the arm 110 etc. are collectively referred to as "gravity-induced force fg".

The motion control apparatus 30 calculates (i) a center of gravity of a structure formed by a work piece held by the end effector 200 in work, the end effector 200, the base 180, and the arm 110 and (ii) a relative position of the center of gravity and the position of the force detection unit 190. The calculation is executed based on (a) respective lengths, positions of centers of gravity, and weights of the work piece, the end effector 200, the arm elements 110a to 110d, and the base 180 and (b) a posture of the arm 110 specified by the rotation angles Da at the time.

Then, the motion control apparatus 30 calculates torque applied to the force detection unit 190 induced by the gravity forces applied to the base 180 and the arm 110 based on the relative position and the weight of the structure (see fg in FIG. 3). Further, the weight of the structure is the force applied to the force detection unit 190 induced by the gravity forces applied to the base 180 and the arm 110 (see fg in FIG. 3).

The motion control apparatus 30 calculates forces and torque induced by the inertial force generated by the motion of the arm 110 of the forces and torque measured by the force detection unit 190 in the following manner. Note that, in FIG. 3, linear forces and torque induced by the inertial force generated by the motion of the arm 110 are collectively referred to as "inertia-induced force fi1".

The motion control apparatus 30 calculates a change of the relative position of the center of gravity of the structure formed by the work piece, the end effector 200, the base 180, and the arm 110 and the position of the force detection unit 190. Then, the motion control apparatus 30 calculates the force fi1 applied to the force detection unit 190 induced by the inertial forces applied to the base 180 and the arm 110 based on an acceleration vector obtained by differentiation of the change of the relative position and the weight of the structure.

The motion control apparatus 30 calculates forces and torque induced by the inertial force generated by the motion of the vehicle 700 of the forces and torque detected by the force detection unit 190 in the following manner. Note that, in FIG. 3, linear forces and torque induced by the inertial force generated by the motion of the vehicle 700 are collectively referred to as "inertia-induced force fi2".

The motion control apparatus 30 calculates the force fi2 applied to the force detection unit 190 induced by the inertial force generated by the motion of the vehicle 700 based on (i) the relative position of the center of gravity of the structure formed by the work piece, the end effector 200, the base 180, and the arm 110 and the position of the force detection unit 190, (ii) a mass of the structure, and (iii) an acceleration vector of the vehicle 700 specified by a change of the rotation angle Dv at the time.

The motion control apparatus 30 calculates the acting force fS by subtraction of those forces fg, fi1, fi2 from the force fm detected by the force detection unit 190 (also see the lower right part of FIG. 2).

By the above described processing, the linearly acting force and torque of the acting force fS acting on the robot 100 may be accurately determined and the force control of the arm 110 and stop of the motion of the arm 110 may be executed.

A3. Input Processing of Parameters for Force Control in Teaching Apparatus 50:

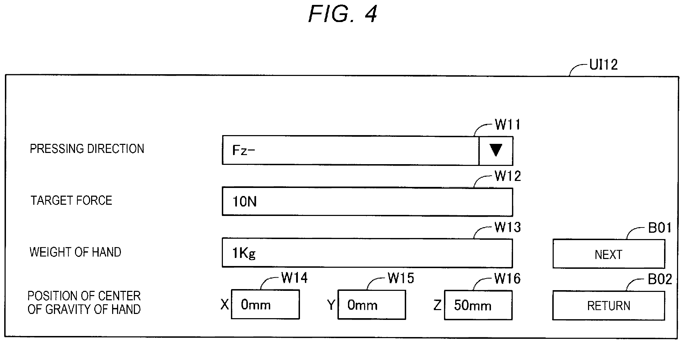

FIG. 4 shows the user interface UI12 displayed on the output device 58 of the teaching apparatus 50. Information is input to the user interface UI12 via the input device 57 of the teaching apparatus 50. The user interface UI12 includes input windows W11 to W16 and buttons B01, B02.

The input window W11 is an interface for input of the direction of the target force in the force control. In the example of FIG. 4, the direction toward the minus side in the Z-axis direction is designated. The input window W12 is an interface for input of the magnitude of the target force in the force control as a part of force information. In the example of FIG. 4, 10 N is designated.

The input window W13 is an interface for input of information of the weight of the end effector 200. In the example of FIG. 4, 1 kg is designated.

The input windows W14 to W16 are interfaces for input of information of a relative position relationship between the position of the distal end of the arm 110 and the position of the center of gravity of the end effector 200 attached to the arm 110 as a part of end effector information. In the example of FIG. 4, as the information of the relative position relationship, a relative position of 0 mm in the X-axis direction, 0 mm in the Y-axis direction, and 50 mm on the plus side in the Z-axis direction are designated.

The button B01 is a button for the user who has finished input to the input windows W11 to W16 to allow the teaching apparatus 50 to perform the next processing. The button B02 is a button for returning to processing before input of the information via the user interface UI12.

The direction and the magnitude of the target force fSt in the force control are input to the teaching apparatus 50 and the motion control apparatus 30 via the user interface UI12 (see the lower part of FIG. 2). The target position St of the motion is also input from the input device 57 of the teaching apparatus 50 via the same interface. In the teaching apparatus 50, the functional unit that receives input of the direction and the magnitude of the target force fSt and input of the target position St of the motion is shown as "receiving unit 53" in FIG. 2.

A4. Contact Detection and Force Control:

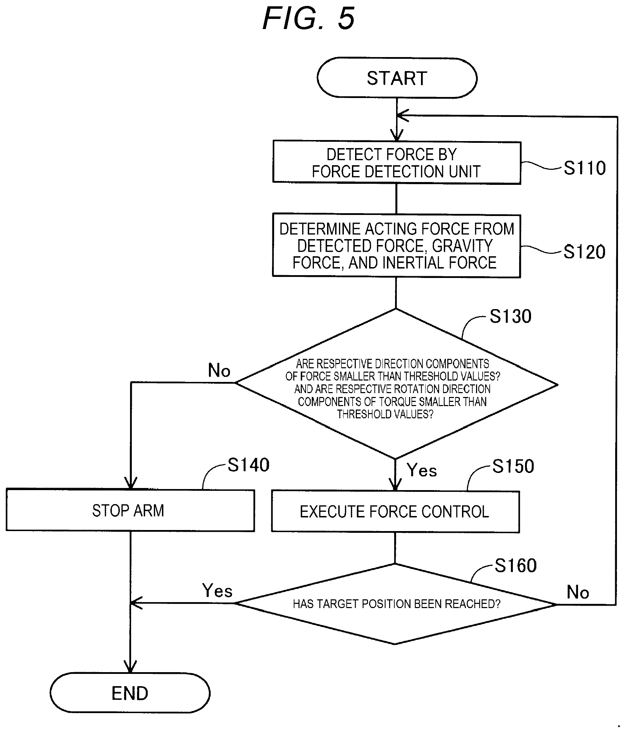

FIG. 5 is the flowchart showing processing of realizing contact detection and force control in the motion control apparatus 30 when the robot 100 is being moved. The motion control apparatus 30 performs the force control of the arm 110 and stop of the arm 110 according to contact between the robot 100 and an object based on output of the force detection unit 190. Specifically, the processing in FIG. 5 is realized by the CPU 301 of the motion control apparatus 30. Note that the target force fSt and the target position St in the force control are input in advance prior to the processing in FIG. 5 (see FIG. 4).

At step S110, the motion control apparatus 30 detects the force fm applied to the force detection unit 190 using the force detection unit 190 (see the right upper part of FIG. 2) . At step S120, the motion control apparatus 30 subtracts the force fg induced by the gravity force and the forces fi1, fi2 induced by the inertial force from the detected force fm and determines the acting force fS (see the right lower part of FIG. 2 and FIG. 3).

At step S130, the motion control apparatus 30 determines whether or not the respective direction components of the acting force fS with respect to the X-axis direction, the Y-axis direction, the Z-axis direction are smaller than force threshold values Thfx, Thfy, Thfz and the respective direction components of the acting force fS with respect to the U-axis direction, the V-axis direction, the W-axis direction are smaller than torque threshold values Thtu, Thtv, Thtw, respectively. The force threshold values Thfx, Thfy, Thfz and the torque threshold values Thtu, Thtv, Thtw are determined in advance according to the motion of the force control that should be realized by the robot 100.

For example, when the magnitude of the force component Fz of the acting force fS detected by the force detection unit 190 in the Z-axis direction exceeds the force threshold value Thfz, when the magnitude of the force component Fx of the acting force fS in the X-axis direction exceeds the force threshold value Thfx, or when the magnitude of the force component Fy of the acting force fS in the Y-axis direction exceeds the force threshold value Thfy, the determination at step S130 is No.

[0061] Further, for example, when the magnitude of the torque component Tw of the acting force fS detected by the force detection unit 190 in the W-axis direction exceeds the torque threshold value Thtw, when the magnitude of the torque component Tu of the acting force fS in the U-axis direction exceeds the torque threshold value Thtu, or when the magnitude of the torque component Tv of the acting force fS in the V-axis direction exceeds the torque threshold value Thtv, the determination at step S130 is No.

[0062] When the determination result at step S130 is No, the processing moves to step S140. When the determination result is Yes, the processing moves to step S150. The determination on the magnitude of the acting force made at step S130 is also referred to as "contact detection".

At step S140, the motion control apparatus 30 stops the arm 110. When one of the respective direction components of the force exceeds the threshold value or when one of the respective direction components of the torque exceeds the threshold value, it may be estimated that the end effector 200 or the robot 100 unintentionally comes into contact with an object. Accordingly, the motion of the arm 110 by the motion control apparatus 30 is halted and the arm 110 is stopped. As a result, possibility of damage on the object by the arm 110 may be reduced. Note that "object" may widely contact with the robot 100. "Object" includes a worker, another robot than the robot 100, a device placed around the robot 100.

At step S150, the motion control apparatus 30 executes the force control for realizing the target force fSt (see FIG. 2). At step S160, the motion control apparatus 30 determines whether or not TCP has reached the target position St. When the determination result is Yes, the processing ends. When the determination result is No, the processing returns to step S110.

By the above described processing, the motion control apparatus 30 may realize the force control of the arm 110 and deceleration of the arm 110 according to contact between the robot 100 and another configuration than a work object based on the force detection unit 190 provided in the base 180.

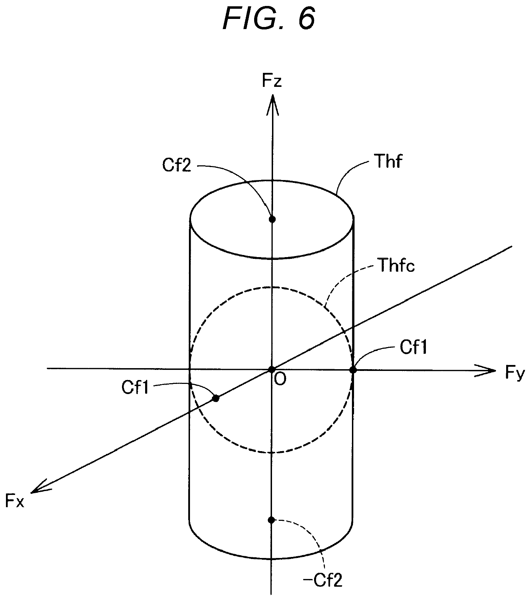

FIG. 6 shows the region Thf in which no contact with another object than the work object is estimated in the virtual space defined by the force component Fx in the X-axis direction, the force component Fy in the Y-axis direction, and the force component Fz in the Z-axis direction of the acting force fS. In the virtual space with the force component Fx in the X-axis direction, the force component Fy in the Y-axis direction, and the force component Fz in the Z-axis direction of the acting force fS as respective axes, the region Thf is the region in which the end effector 200 or the robot 100 is in no unintentional contact with an object (see S130 in FIG. 5). FIG. 6 shows the region Thf in which no contact is estimated when the force control of applying a force in the Z-axis direction is performed (see W11 in FIG. 4).

When the threshold value of the magnitude of the force component of the acting force fS when it is estimated that the end effector 200 or the robot 100 contacts an object is set to a fixed value regardless of the direction of the force component of the acting force fS, the region in which no contact is estimated is shown by a region Thfc in FIG. 6. The region Thfc has a spherical shape in the space defined by the Fx-axis, the Fy-axis, and the Fz-axis.

On the other hand, in the embodiment, the region Thf in which no contact is estimated has a circular cylindrical shape around a center axis along the Fz-axis direction. The region Thf has the circular cylindrical shape in contact with the outer edge of the spherical region Thfc in the Fx-Fy plane and extends to a position farther from the origin O than the spherical region Thfc in the Fz-axis direction. The outer edge on the plus side in the Fz-axis direction and the outer edge on the minus side in the Fz-axis direction of the region Thf are flat surfaces perpendicular to the Fz-axis. That is, the region Thf has the circular cylindrical shape in which the length along the axis direction is larger than the radius of the circle of the bottom surface. When coordinates of a point on the outer edge of the region Thf are (Thfx, Thfy, Thfz), the outer edge of the region Thf is defined by the following expression (2):

$$\mathrm{Thfx2 + Thfy2 = Cf12 \ and \ Thfz = \pm Cf2 \ ...(2)}$$

where 0 < Cf1 < Cf2.

As a result, the magnitude |Thfz| of the force threshold value of no contact in the Fz-axis direction is larger than the magnitude |Thfx| of the force threshold value of no contact in the Fx-axis direction and the magnitude |Thfy| of the force threshold value of no contact in the Fy-axis direction.

In the case where the arm 110 is stopped according to the contact (see S140 in FIG. 5) while the force control is performed (see S150 in FIG. 5) based on the acting force fS detected by the force detection unit 190 provided in the base 180, when an equal force threshold value is set with respect to the respective directions, the following problem may be caused. That is, with respect to the direction in which a force is easily applied to the force detection unit 190 by the motion of the robot 100 (the Z-axis direction in the embodiment), the magnitude of the detected force component frequently exceeds the force threshold value Thfz and the arm 110 is frequently stopped. However, in the embodiment, the direction in which a force is easily applied to the force detection unit 190 by the motion of the robot 100 (the Z-axis direction in the embodiment) is set to a direction in which the force threshold value is set to be larger than the others, and thereby, the arm 110 may be appropriately stopped according to the contact.

More specifically, in the embodiment, the direction in which the force threshold value is set to be larger than the others is a direction of the target force fSt of the force control received by the motion control apparatus 30 (see W11 of FIG. 4 and FIG. 6) . Accordingly, the possibility of execution of stop of the arm 110 due to the force control of the robot 100 may be reduced. On the other hand, with respect to the other directions, contact with an object may be sensitively sensed.

Further, in the embodiment, the direction in which the force threshold value is set to be larger than the others is a direction parallel to the rotation axes of the joints J11, J12 of the arm elements 110a, 110b (see FIGS. 1 and 6). Accordingly, the force threshold value Thfz with respect to the direction in which the arm elements 110a, 110b do not rotationally move is set to be larger than the force threshold values Thfx, Thfy with respect to the other directions. That is, the force threshold value is set to be larger with respect to the direction of the rotation axis in which the possibility of contact with an object due to the motion of the arm elements 110a, 110b is lower. Therefore, the possibility of execution of stop of the arm 110 due to the force control of the robot 100 may be reduced with respect to the direction of the rotation axis in which the possibility of contact with an object due to the motion of the arm elements 110a, 110b is lower. On the other hand, with respect to the other X-axis direction and Y-axis direction, contact with an object due to motion of the arm elements 110a, 110b may be sensitively sensed.

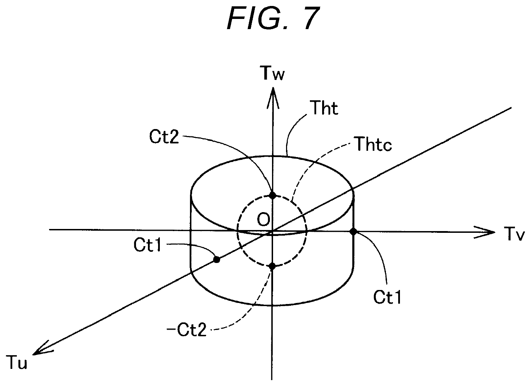

FIG. 7 shows the region Tht in which no contact is estimated in the virtual space defined by the torque component Tu in the U-axis direction, the torque component Tv in the V-axis direction, and the torque component Tw in the W-axis direction of the acting force fS. Within the virtual space with the torque component Tu in the U-axis direction, the torque component Tv in the V-axis direction, and the torque component Tw in the W-axis direction of the acting force fS as respective axes, the region Tht is the region in which the end effector 200 or the robot 100 is in no unintentional contact with another object than the work object (see S130 in FIG. 5) . FIG. 7 shows the region Tht in which no contact of the scalar robot (see FIG. 1) having the rotation axis of the arm element parallel to the Z-axis direction is estimated.

When the threshold value of the magnitude of the torque component of the acting force fS when it is estimated that the end effector 200 or the robot 100 contacts an object is set to a fixed value regardless of the rotation axis direction of the torque component of the acting force fS, the region in which no contact is estimated is shown by a region Thtc in FIG. 7. The region Thtc has a spherical shape in the space defined by the Tu-axis, the Tv-axis, and the Tw-axis.

On the other hand, in the embodiment, the region Tht in which no contact is estimated has a circular cylindrical shape around a center axis along the Tw-axis direction. The region Tht has the circular cylindrical shape in contact with the outer edge of the spherical region Thtc respectively at the center points of both end surfaces of the circular cylindrical shape and extends to a position farther from the origin O than the outer edge of the spherical region Thtc in the Tu-Tw plane. The outer edge on the plus side in the Tw-axis direction and the outer edge on the minus side in the Fz-axis direction of the region Tht are flat surfaces perpendicular to the Tw-axis. When coordinates of a point on the outer edge of the region Tht are (Thtu, Thtv, Thtw), the outer edge of the region Tht is defined by the following expression (3):

$$\mathrm{Thtu2 + Thtv2 = Ct12 \; and \; Thtw = \pm Ct2 \; ...(3)}$$

where $0 < Ct2 < Ct1$.

As a result, the magnitude |Thtw| of the torque threshold value of no contact in the Tw-axis direction is smaller than the maximum values of the magnitude |Thtu| of the torque threshold value of no contact in the Tu-axis direction and the magnitude |Thtv| of the torque threshold value of no contact in the Tv-axis direction.

In the case where the arm 110 is stopped according to the contact (see S140 in FIG. 5) while the force control is performed (see S150 in FIG. 5) based on the acting force fS detected by the force detection unit 190 provided in the base 180, when an equal torque threshold value is set with respect to the respective rotation directions, the following problem may be caused. That is, the torque threshold value is set according to the rotation direction (in the embodiment, the W-axis direction) in which the possibility of contact with an object due to the motion of the robot 100 is higher and, as a result, with respect to the other rotation directions, the magnitude of the torque component detected due to the force control unnecessarily frequently exceeds the torque threshold values and the arm 110 is frequently decelerated. However, in the above described configuration, the rotation direction (in the embodiment, the W-axis direction) in which the possibility of contact with an object due to the motion of the robot 100 is higher is set to a direction in which the torque threshold value is smaller than the others, and thereby, the arm 110 may be appropriately stopped according to the contact.

More specifically, in the embodiment, the direction in which the torque threshold value is set to be smaller than the maximum values of the torque threshold values in the other directions is a direction parallel to the rotation axes of the joints J11, J12 of the arm elements 110a, 110b. That is, with respect to the W-axis direction in which the possibility of contact with an object due to the movement of the arm elements 110a, 110b, the torque threshold value Thtw is set to be smaller than the torque threshold values Thtu, Thtv with respect to the other directions. Accordingly, with respect to the W-axis direction in which the possibility of contact with an object due to the movement of the arm elements 110a, 110b, contact with an object due to movement of the arm elements 110a, 110b may be sensitively sensed. On the other hand, with respect to the other U-axis direction and V-axis direction, the possibility of execution of stop of the arm 110 due to the force control of the robot 100 may be reduced.

According to the above described robot system 1 of the first embodiment, the force control of the arm 110 (see S150 in FIG. 5) and stop when the robot 100 contacts an object (see S140 in FIG. 5) may be realized based on the force detection unit 190 provided in the base 180.

The robot system 1 of the first embodiment does not include a secondary force detection unit for force control in the distal end of the arm 110. As a result, compared to a configuration including a force detection unit in the distal end of the arm, the mass of the distal end of the arm 110 is smaller. Accordingly, compared to the configuration including a force detection unit in the distal end of the arm, the movement velocity of the distal end of the arm 110 that may be realized by the same output of the motor is higher. Further, the output of the motor necessary for movement of the distal end of the arm 110 at the equal velocity may be made smaller. Furthermore, compared to the configuration including a force detection unit for force control in the distal end of the arm, the manufacturing cost may be reduced.

The motion control apparatus 30 in the embodiment is also referred to as "control unit". The Z-axis direction in the robot coordinate system RC is also referred to as "first direction". The X-axis direction and the Y-axis direction in the robot coordinate system RC are also referred to as "second directions". The force threshold value Thfz is also referred to as "first force threshold value". The force threshold values Thfx, Thfy are also referred to as "second force threshold values".

The W-axis direction in the robot coordinate system RC in the embodiment is also referred to as "first rotation direction". The U-axis direction and the V-axis direction in the robot coordinate system RC are also referred to as "second rotation directions". The torque threshold value Thtw is also referred to as "first torque threshold value". The torque threshold values Thtu, Thtv are also referred to as "second torque threshold values".

B. Second Embodiment:

In the above described first embodiment, the example of force control and contact detection when the robot system 1 performs work is explained. However, the force control and the contact detection in FIG. 5 may be applied when motion is taught to the robot 100 prior to the work by the robot system 1. As below, the force control and the contact detection when motion is taught to the robot 100 will be explained. The second embodiment is different in that the processing in FIG. 5 is executed when teaching to the robot 100 is performed and the details of processing at steps S150 and S160 of the processing in FIG. 5 executed by the motion control apparatus 30 are different. The rest of the second embodiment is the same as that of the first embodiment.

The teaching of the motion to the robot 100 includes processing of the so-called direct teaching. In the direct teaching, the user moves the distal end of the arm element 110c (see FIG. 1) to a desired position, and the position is taught to the robot system 1. An instruction to store the position is given via the input device 57 of the teaching apparatus 50. The input of the target position St to the robot system 1 (see the lower part of FIG. 2) may be performed in the configuration. The functional unit of the teaching apparatus 50 that fulfills the function is the receiving unit 53.

The motion control apparatus 30 executes the processing in FIG. 5 in the direct teaching. In the direct teaching, while the user does not apply a force to the distal end of the arm element 110c, the motion control apparatus 30 does not move the arm 110 and maintains the posture of the arm 110. In the direct teaching, while the user is applying a force to the distal end of the arm element 110c, the motion control apparatus 30 moves and rotates the distal end of the arm 110 according to the force detected by the force detection unit 190.

At step S150 in FIG. 5, the motion control apparatus 30 moves and rotates the distal end of the arm 110 not to make the force and toque detected by the force detection unit 190 larger than reference values. These reference values of the forces and reference values of the torque are determined with respect to the respective axis directions. These reference values of the forces and reference values of the torque are smaller than the force threshold values Thfx, Thfy, Thfz and the torque threshold values Thtu, Thtv Thtw at step S130, respectively.

Further, at step S150, when the acting force is not detected by the force detection unit 190, that is, when the user does not apply a force to the distal end of the arm element 110c, the motion control apparatus 30 does not move the arm 110 and maintains the posture of the arm 110.

At step S160, the user determines whether or not the distal end of the arm 110 reaches the target position St to be taught to the robot 100. When the determination result is No, the processing returns to step S110 and the user subsequently moves the distal end of the arm element 110c. When the determination result is Yes, the processing in FIG. 5 ends and the user stores the position of the distal end of the arm element 110c at the time in the robot system 1 via the input device 57 of the teaching apparatus 50.

In the second embodiment, while the direct teaching is performed, when the arm 110 contacts an object, through the determination at step S130, the motion of the arm 110 is stopped at step S140. Accordingly, during the direct teaching, the possibility that the user damages an object by mistake may be reduced.

In the second embodiment, in the teaching of the motion to the robot system 1, the force control of the arm 110 (see S150 in FIG. 5) and stop when the robot 100 contacts an object (see S140 in FIG. 5) may be performed based on the force detection unit 190 provided in the base 180.

C. Third Embodiment:

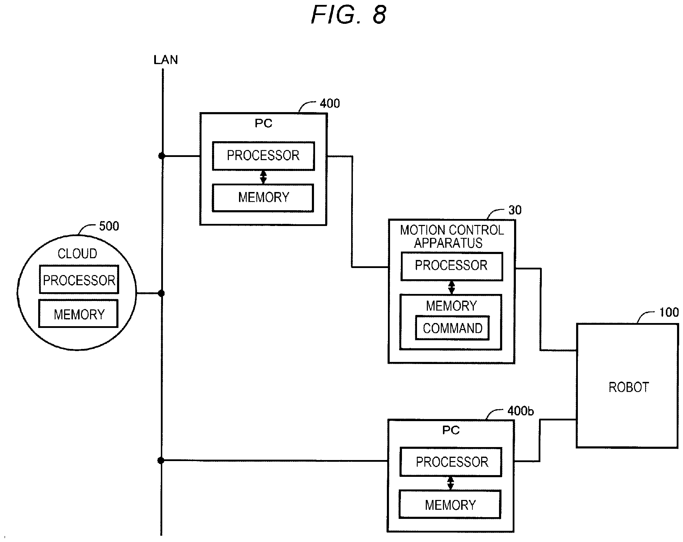

FIG. 8 is the conceptual diagram showing the example of the configuration of the control apparatus of the robot including the plurality of processors. In the example, in addition to the robot 100 and the motion control apparatus 30, personal computers 400, 400b and a cloud service 500 provided via a network environment such as LAN are illustrated. Each of the personal computers 400, 400b includes a processor and a memory. Further, a processor and a memory are available in the cloud service 500. The processor executes a command that can be executed by the computer. The robot control apparatus 25 including the motion control apparatus 30 and the teaching apparatus 50 can be realized using part or all of these plurality of processors. Further, the memory units storing various kinds of information can be realized using part or all of the plurality of memories.

D. Fourth Embodiment:

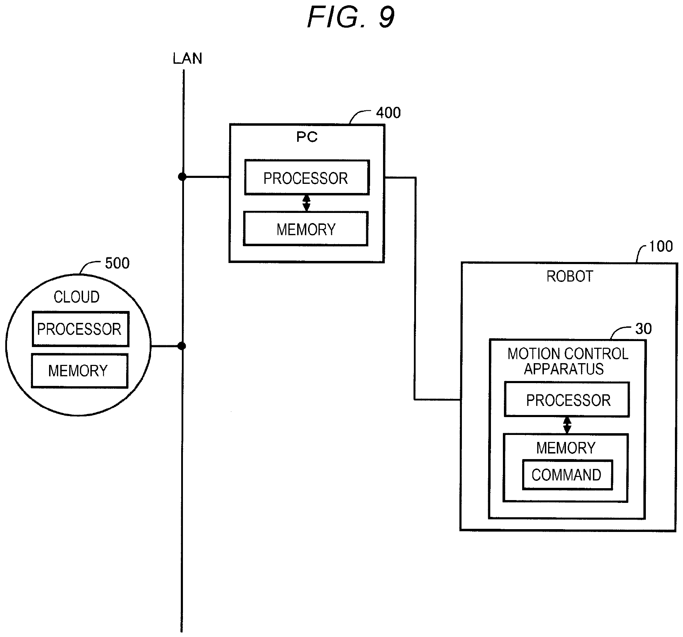

FIG. 9 is the conceptual diagram showing another example of the configuration of the control apparatus of the robot including the plurality of processors. The example is different from that in FIG. 8 in that the motion control apparatus 30 of the robot 100 is housed in the robot 100. Also, in this example, the control apparatus of the robot 100 can be realized using part or all of the plurality of processors. Further, the memory units storing various kinds of information can be realized using part or all of the plurality of memories.

E. Other Embodiments:

E1. Other Embodiments 1:

(1) In the above described embodiments, the motion control apparatus 30 acquires the rotation angles of the output shafts of the servo motors 410v1, 410v2 from the encoders 420v1, 420v2, and calculates the force fi2 induced by the inertial force generated by the motion of the vehicle 700 based on the changes of the rotation angles. However, in a configuration in which the vehicle 700 includes an inertial measurement unit (IMU), the motion control apparatus 30 may acquire information of accelerations in the X-axis direction, the Y-axis direction, and the Z-axis direction and angular velocities in the U-axis direction, the V-axis direction, and the W-axis direction of the vehicle 700 from the inertial measurement unit. Then, the motion control apparatus 30 may calculate the force fi2 induced by the inertial force generated due to the motion of the vehicle 700 based on those accelerations and angular accelerations obtained from the angular velocities. In FIG. 1, the inertial measurement unit is shown as an IMU 710.
Note that the inertial measurement unit may be provided in another location than the vehicle 700. For example, the base 180 of the robot 100 may include the inertial measurement unit. The inertial measurement unit may be provided in another location than the base in the robot. Note that the inertial measurement unit may be provided in a part nearer the base than a component element movable relative to the base in the robot.

(2) In the above described embodiments, the robot 100 is supported by the vehicle 700 (see FIG. 1). However, a configuration in which the base 180 of the robot 100 does not move may be employed. In the configuration, it is not necessary to perform processing of removing the force fi2 induced by the inertial force generated due to the motion of the vehicle 700 from the force fm measured by the force detection unit 190 (see the lower part of FIG. 3).

(3) In the above described embodiments, the motion control apparatus 30 executes the force control for realizing the target force fSt (see FIG. 2 and S150 in FIG. 5) . Further, the target force fSt may include a linearly acting force and torque as components. That is, the force control is performed on the linearly acting force and torque. However, the force control may be performed only on the linearly acting force. In the configuration, the force detection unit 190 may not sense torque. Further, in the configuration, it is not necessary to make comparison with the threshold value regarding the torque (see S130 in FIG. 5). For example, when the force control is performed in the scalar robot, the force control may be performed with sufficient accuracy even when the force control is performed only on the linearly acting force. Note that force control and contact detection may be performed with higher accuracy by force control in consideration of torque.

(4) In the above described embodiments, the technique of the present disclosure is explained using the scalar robot 100 including the single arm 110 as an example. However, the technique of the present disclosure may be applied to a robot including a plurality of arms such as a robot with two arms.

(5) In the above described embodiments, when one of the respective direction components with respect to the X-axis direction, the Y-axis direction, and the Z-axis direction of the acting force fS is larger than the force threshold value or the respective direction components with respect to the U-axis direction, the V-axis direction, and the W-axis direction of the acting force fS are larger than the torque threshold values, the motion control apparatus 30 stops the arm 110. However, in this case, the motion control apparatus 30 may keep the arm moving while reducing the motion velocity of the arm. In this specification, reduction of the motion velocity of the arm is referred to as "deceleration of arm" regardless of whether or not the motion velocity finally becomes zero.
Further, when one of the respective direction components with respect to the X-axis direction, the Y-axis direction, and the Z-axis direction of the acting force fS is larger than the force threshold value or the respective direction components with respect to the U-axis direction, the V-axis direction, and the W-axis direction of the acting force fS are larger than the torque threshold values (see S130 in FIG. 5), that is, when contact with an object is determined in the contact detection, the processing to be performed is deceleration of the arm. However, the processing to be performed when an affirmative determination of the contact detection is made may be output of a warning by processing of an image, sound, or lighting of a lamp.

(6) In the above described embodiments, the directions of the rotation axes of the joints J11, J12 of the arm elements 110a, 110b are parallel to the direction of gravity force. However, the directions of the rotation axes of the joints of the plurality of arm elements in the scalar robot may be set to directions different from the direction of gravity force. Further, the technique of the present disclosure may be applied to a robot used in a gravityless environment.

E2. Other Embodiments 2:

(1) In the above described embodiments, the magnitude |Thfz| of the force threshold value of no contact in the Z-axis direction is larger than the magnitude |Thfx| of the force threshold value of no contact in the X-axis direction and the magnitude |Thfy| of the force threshold value of no contact in the Y-axis direction (see FIG. 6). However, the magnitude of the force threshold values in the respective directions may be equal to each other (see Thfc in FIG. 6). As the configuration, force control of the arm and deceleration when the robot contacts an object may be performed based on the force detection unit provided in the base.

(2) In the above described embodiments, the force threshold values are set for the respective direction components with respect to the X-axis direction, the Y-axis direction, and the Z-axis direction of the robot coordinate system RC. However, the force threshold values may be set for respective axis directions of a coordinate system different from the robot coordinate system RC. In the configuration, the acting force fS is coordinate-transformed to a force vector based on the coordinate system in which the force threshold values are set, and then, comparison with the threshold values is executed (see S130 in FIG. 5).

E3. Other Embodiment 3:

In the above described embodiments, the motion control apparatus 30 subtracts the force fg induced by the gravity force and fi1, fi2 induced by the inertial force from the force fm detected by the force detection unit 190, and thereby, calculates the acting force fS (see FIG. 3 and the lower right part of FIG. 2) . However, a configuration without compensation for the force induced by the gravity force and the inertial force may be employed. In the configuration, it is preferable to determine the force threshold values and the torque threshold values in the respective directions in consideration of the force induced by the gravity force and the inertial force induced by the motion of the robot and the vehicle in advance. Further, a configuration in which only one of compensation for the force induced by the gravity force and compensation for the inertial force is performed may be employed.

E4. Other Embodiments 4:

(1) In the above described embodiments, the direction in which the force threshold value is larger than the others is the direction parallel to the rotation axes of the joints J11, J12 of the arm elements 110a, 110b (see FIGS. 1 and 6). However, the direction in which the force threshold value is larger than the others may be a direction not parallel to the rotation axes of the joints of the arm elements.

(2) In the above described embodiments, the robot 100 is the scalar robot (see FIG. 1). However, an object to which the technique of the present disclosure is applied may be another robot such as a vertical articulated robot.

E5. Other Embodiment 5:

In the above described embodiments, the direction in which the force threshold value is larger than the others is the direction of the target force fSt of the force control received by the motion control apparatus 30 (see W11 in FIG. 4 and FIG. 6). However, the direction in which the force threshold value is larger than the others may be a direction different from the direction of the target force for the force control. The direction in which the force threshold value is larger than the others may be determined based on various directions including the direction of the rotation axis of the robot and the direction of gravity force.

E6. Other Embodiments 6:

(1) In the above described embodiments, the magnitude |Thtw| of the torque threshold value of no contact in the W-axis direction is smaller than the magnitude |Thtu| of the torque threshold value of no contact in the U-axis direction and the magnitude |Thtv| of the torque threshold value of no contact in the V-axis direction (see FIG. 7) . However, the magnitude of the torque threshold values in the respective directions may be equal to each other (see Thfc in FIG. 7). Even in the configuration, force control of the arm and deceleration when the robot contacts an object may be performed based on the force detection unit provided in the base.

(2) In the above described embodiments, the torque threshold values are set for the respective direction components with respect to the X-axis direction, the Y-axis direction, and the Z-axis direction of the robot coordinate system RC, more specifically, with respect to the U-axis direction, the V-axis direction, and the W-axis direction. However, the torque threshold values may be set for respective axis directions of a coordinate system different from the robot coordinate system RC. In the configuration, the acting force fS is coordinate-transformed to a torque vector based on the coordinate system in which the torque threshold values are set, and then, comparison with the threshold values is executed (see S130 in FIG. 5).

E7. Other Embodiment 7:

In the above described embodiments, the motion control apparatus 30 subtracts the force fg induced by the gravity force and fi1, fi2 induced by the inertial force from the force fm detected by the force detection unit 190, and thereby, calculates the acting force fS (see FIG. 3 and the lower right part of FIG. 2). However, a configuration in which compensation for the force induced by the gravity force and the inertial force is performed on only one of the linear force and the torque may be employed.

In a configuration in which compensation for the force induced by the gravity force and the inertial force is not performed on the torque, the torque threshold values in the respective directions may be determined in consideration of the force induced by the gravity force and the inertial force induced by the motion of the robot and the vehicle in advance. In a configuration in which compensation for the force induced by the gravity force and the inertial force is not performed on the linear force, the force threshold values in the respective directions may be determined in consideration of the force induced by the gravity force and the inertial force induced by the motion of the robot and the vehicle in advance.

E8. Other Embodiment 8:

In the above described embodiments, the rotation axis direction in which the torque threshold value is set to be smaller than the others is the rotation axis direction parallel to the rotation axes of the joints J11, J12 of the arm elements 110a, 110b (see FIGS. 1 and 6). However, the rotation axis direction in which the torque threshold value is set to be smaller than the others may be a rotation axis direction not parallel to the rotation axes of the joints of the arm elements.

F. Yet Other Embodiments:

The present disclosure is not limited to the above described embodiments, but may be realized in various configurations without departing from the scope thereof. For example, the present disclosure can be realized in the following configurations. The technical features in the above described embodiments corresponding to the technical features in the following respective configurations may be appropriately replaced or combined to solve part or all of the problems of the present disclosure or achieve part or all of the effects of the present disclosure. Further, the technical features not explained as essential features in this specification can be appropriately deleted.

(1) According to an aspect of the present disclosure, a robot system is provided. The robot system includes a robot having a base, an arm supported by the base, and a force detection unit provided in the base and detecting a force applied to the arm, and a control apparatus having a control unit that performs force control of the arm and contact detection between the robot and an object based on output of the force detection unit.

According to the configuration, the force control of the arm and the contact detection between the robot and the object may be performed based on the force detection unit provided in the base. As a result, compared to a configuration in which the force detection unit for the force control is provided in a distal end of the arm, the movement velocity of the distal end of the arm that may be realized by the same output is higher.

Note that, in this specification, a force in a narrow sense is a second force and refers to a linearly acting force. On the other hand, a force in a broad sense is a first force and includes the second force and torque.

According to an aspect of the present disclosure, a robot system is provided. The robot system is a robot system that performs contact detection with an object and that includes a robot having a base, an arm supported by the base, and a force detection unit provided in the base and detecting a first force applied to the arm, and a control unit that controls motion of the robot. The control unit performs force control of the arm and deceleration of the arm based on contact between the robot and an object.

According to the configuration, the force control of the arm and the deceleration when the robot contacts the object may be performed based on the force detection unit provided in the base. As a result, compared to a configuration in which the force detection unit for the force control is provided in the distal end of the arm, the movement velocity of the distal end of the arm that may be realized by the same output is higher. Further, the output necessary for movement of the distal end of the arm at the equal velocity is smaller. Furthermore, compared to the configuration including the force detection unit for force control in the distal end of the arm, the manufacturing cost may be reduced.

(2) In the robot system having the above described configuration, the first force may include a second force and torque, and the control unit may execute the deceleration of the arm based on the contact detection when magnitude of a force component of the second force in a first direction exceeds a first force threshold value and when magnitude of a force component of the second force in a second direction exceeds a second force threshold value smaller than the first force threshold value.

In the case where the contact detection is performed while the force control is performed based on the force detected by the force detection unit provided in the base, when an equal force threshold value is set with respect to the respective directions, the following problem may be caused. That is, with respect to the direction in which a force is easily applied to the force detection unit due to the motion of the robot, the magnitude of the detected force component frequently exceeds the force threshold value and the contact detection may be frequently performed. However, in the above described configuration, the first direction is set according to the direction in which a force is easily applied to the force detection unit due to the motion of the robot, and thereby, the contact detection may be appropriately performed with respect to the direction in which a force is easily applied to the force detection unit due to the motion of the robot.

In the robot system having the above described configuration, the force detection unit may detect force components of the second force in three directions different from one another, the control unit may execute the deceleration of the arm when magnitude of a force component of an acting force detected by the force detection unit in the first direction exceeds the first force threshold value and when magnitude of a force component of the acting force in the second direction exceeds the second force threshold value, the second direction may be different from the first direction, and the first force threshold value may be larger than the second force threshold value.

In the case where the deceleration of the arm according to the contact is performed while the force control is performed based on the acting force detected by the force detection unit provided in the base, when an equal force threshold value is set with respect to the respective directions, the following problem may be caused. That is, with respect to the direction in which a force is easily applied to the force detection unit due to the motion of the robot, the magnitude of the detected force component frequently exceeds the force threshold value and the deceleration of the arm may be frequently performed. However, in the above described configuration, the first direction is set according to the direction in which a force is easily applied to the force detection unit due to the motion of the robot, and thereby, the deceleration of the arm according to the contact may be appropriately performed with respect to the direction in which a force is easily applied to the force detection unit due to the motion of the robot.

Note that, in this specification, a direction A and a direction B being "different" refers to the direction A and the direction B having a relationship not including the same and parallel.

(3) In the robot system having the above described configuration, the control unit may perform the force control and the contact detection based on a force obtained by subtraction of a force induced by a gravity force acting on the arm and an inertial force induced by motion of the arm from the second force.

According to the configuration, the force acting on the robot may be accurately determined and the contact detection may be executed.

In the robot system having the above described configuration, the control unit may determine the acting force based on the second force, the force induced by the gravity force acting on the arm, and the inertial force induced by the motion of the arm.

In the robot system having the above described configuration, the arm may include a plurality of arm elements rotating around rotation axes along directions parallel to one another, but not include an arm element with a rotation axis along a direction perpendicular to the rotation axes of the plurality of arm elements, and the first direction may be a direction parallel to the rotation axes of the plurality of arm elements.

In the above described configuration, the first force threshold value with respect to the direction in which the arm element does not rotationally move is set to be larger than the second force threshold value with respect to the other direction. That is, the first force threshold value is set to be larger with respect to the direction in which the possibility of contact with an object due to the movement of the arm element is lower. Accordingly, the possibility of execution of deceleration of the arm due to the force control of the robot may be reduced with respect to the direction in which the possibility of contact with an object due to the movement of the arm element is lower. On the other hand, with respect to the other directions, contact with an object due to movement of the arm elements may be sensitively sensed.

(4) In the robot system having the above described configuration, the first direction may be a direction of a target force of the force control received by the control unit.

In the above described configuration, the first force threshold value with respect to the direction of the target force is set to be larger than the second force threshold value with respect to the other direction. Accordingly, the possibility of execution of the deceleration of the arm due to the force control of the robot may be reduced. On the other hand, contact with an object may be sensitively sensed with respect to the other direction.

(5) In the robot system having the above described configuration, the control unit may execute the deceleration of the arm when magnitude of a torque component of the torque in a first rotation direction exceeds a first torque threshold value and when magnitude of a torque component of the torque in a second rotation direction exceeds a second torque threshold value larger than the first torque threshold value.

In the case where the contact detection is performed while the force control is performed based on the torque detected by the force detection unit provided in the base, when an equal torque threshold value is set with respect to the respective rotation directions, the following problem may be caused. That is, the torque threshold value is set according to the rotation direction in which the possibility of contact with an object due to the motion of the robot is higher and, as a result, with respect to the other rotation directions, the magnitude of the torque component detected due to the force control unnecessarily frequently exceeds the torque threshold value and the contact detection may be frequently performed. However, in the above described configuration, the first rotation direction is set according to the rotation direction in which the possibility of contact with an object due to the motion of the robot is higher, and thereby, the contact detection may be appropriately performed with respect to the other direction.

In the robot system having the above described configuration, the force detection unit may further detect torque components of the torque in three rotation directions different from one another, and the control unit may execute the deceleration of the arm when magnitude of the torque component of the acting force in the first rotation direction exceeds the first torque threshold value or when magnitude of the torque component of the acting force in the second rotation direction exceeds the second torque threshold value, the second rotation direction may be a rotation direction different from the first rotation direction, and the first torque threshold value may be smaller than the maximum value of the second torque threshold value.

In the case where the deceleration of the arm according to the contact is performed while the force control is performed based on the acting force detected by the force detection unit provided in the base, when an equal torque threshold value is set with respect to the respective rotation directions, the following problem may be caused. That is, the torque threshold value is set according to the rotation direction in which the possibility of contact with an object due to the motion of the robot is higher and, as a result, with respect to the other rotation directions, the magnitude of the torque component detected due to the force control unnecessarily frequently exceeds the torque threshold value and the deceleration of the arm may be frequently performed. However, in the above described configuration, the first rotation direction is set according to the rotation direction in which the possibility of contact with an object due to the motion of the robot is higher, and thereby, the deceleration of the arm according to the contact may be appropriately performed with respect to the other direction.

Note that, in this specification, a rotation direction P and a rotation direction Q being "different" refers to the rotation direction P and the rotation direction Q having a relationship not including the same and parallel.

(6) In the robot system having the above described configuration, the control unit may perform the force control and the contact detection based on torque obtained by subtraction of torque induced by the gravity force acting on the arm and torque induced by an inertial force generated by motion of the arm from the torque detected by the force detection unit.

According to the configuration, the torque acting on the robot may be accurately determined and the deceleration of the arm may be executed.

In the robot system having the above described configuration, the control unit may determine the acting force based on the torque detected by the force detection unit, the force induced by the gravity force acting on the arm, and the inertial force induced by motion of the arm.

According to the configuration, the torque of the acting force acting on the robot may be accurately determined and the deceleration of the arm may be executed.

(7) In the robot system having the above described configuration, the robot may be a horizontal articulated robot.

In the configuration, with respect to the direction in which the possibility of contact with an object is higher, settings may be made to sensitively sense the contact with the object. On the other hand, with respect to the other direction, the possibility of contact detection due to the force control of the robot may be reduced.

In the robot system having the above described configuration, the arm may include a plurality of arm elements rotating around rotation axes along directions parallel to one another, but not include an arm element with a rotation axis along a direction perpendicular to the rotation axes of the plurality of arm elements, and the first direction may be a direction parallel to the rotation axes of the plurality of arm elements.

In the above described configuration, the first force threshold value with respect to the rotation direction in which the arm element moves is set to be smaller than the second force threshold value with respect to the other direction. That is, the first torque threshold value is set to be smaller with respect to the direction in which the possibility of contact with an object due to the movement of the arm element is higher. Accordingly, the contact with an object due to the movement of the arm element may be sensitively sensed with respect to the direction in which the possibility of contact with the object due to the movement of the arm element is higher. On the other hand, with respect to the other directions, the possibility of execution of the deceleration of the arm due to the force control of the robot may be reduced.

Not all of the plurality of component elements of the above described respective embodiments of the present disclosure are essential. To solve part or all of the above described problems or to achieve part or all of the advantages described in this specification, changes, deletion, replacement by new other component elements, and partial deletion of limitations can be appropriately made to partial component elements of the plurality of component elements. Further, to solve part or all of the above described problems or to achieve part or all of the advantages described in this specification, part or all of the technical features contained in the above described one embodiment of the present disclosure can be combined with part or all of the technical features contained in the above described other embodiment of the present disclosure and one independent embodiment of the present disclosure can be formed.

**Claims**

1. A robot system that performs contact detection with an object, comprising:

   a robot having a base, an arm supported by the base, and a force detection unit provided in the base and detecting a first force applied to the arm; and
   a control apparatus having a control unit that performs force control of the arm and the contact detection between the robot and the object based on output of the force detection unit.

2. The robot system according to claim 1, wherein
   the first force includes a second force and torque, and
   the control unit executes deceleration of the arm based on the contact detection when magnitude of a force component of the second force in a first direction exceeds a first force threshold value and when magnitude of a force component of the second force in a second direction exceeds a second force threshold value smaller than the first force threshold value.

3. The robot system according to claim 2, wherein the control unit performs the force control and the contact detection based on a force obtained by subtraction of a force induced by a gravity force acting on the arm and an inertial force induced by motion of the arm from the second force.

4. The robot system according to claim 2, wherein the first direction is a direction of a target force of the force control received by the control unit.

5. The robot system according to claim 2, wherein the control unit executes the deceleration of the arm when magnitude of a torque component of the torque in a first rotation direction exceeds a first torque threshold value and when magnitude of a torque component of the torque in a second rotation direction exceeds a second torque threshold value larger than the first torque threshold value.

6. The robot system according to claim 5, wherein the control unit performs the force control and the contact detection based on torque obtained by subtraction of torque induced by a gravity force acting on the arm and torque induced by an inertial force generated due to motion of the arm from the torque.

7. The robot system according to claim 1, wherein the robot is a horizontal articulated robot.

## FIG. 1

# FIG. 2

# FIG. 3

*FIG. 4*

| | |
|---|---|
| PRESSING DIRECTION | Fz−  ▼ (W11) |
| TARGET FORCE | 10N (W12) |
| WEIGHT OF HAND | 1Kg (W13) |
| POSITION OF CENTER OF GRAVITY OF HAND | X 0mm (W14)  Y 0mm (W15)  Z 50mm (W16) |

UI12

NEXT (B01)

RETURN (B02)

# FIG. 5

START

DETECT FORCE BY
FORCE DETECTION UNIT — S110

DETERMINE ACTING FORCE FROM
DETECTED FORCE, GRAVITY
FORCE, AND INERTIAL FORCE — S120

S130

ARE RESPECTIVE DIRECTION COMPONENTS
OF FORCE SMALLER THAN THRESHOLD VALUES?
AND ARE RESPECTIVE ROTATION DIRECTION
COMPONENTS OF TORQUE SMALLER THAN
THRESHOLD VALUES?

No

Yes

S140 — STOP ARM

S150 — EXECUTE FORCE CONTROL

S160

HAS TARGET POSITION BEEN REACHED?

Yes

No

END

## FIG. 6

# FIG. 7

# FIG. 8

# FIG. 9

LAN

PC ⟨400

PROCESSOR

MEMORY

CLOUD ⟨500

PROCESSOR

MEMORY

ROBOT ⟨100

MOTION CONTROL APPARATUS ⟨30

PROCESSOR

MEMORY

COMMAND

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018138212 A

- JP 2017177293 A